# EUROPÄISCHE PATENTSCHRIFT

(11) **EP 2 121 804 B1**
(45) Veröffentlichungstag und Bekanntmachung des Hinweises auf die Patenterteilung: **30.06.2010**
(21) Anmeldenummer: 07857405.0
(22) Anmeldetag: 11.12.2007
(51) Int. Cl.: C08G 65/00, C08G 65/26

(54) **VERFAHREN ZUR HOMOGEN KATALYSIERTEN HERSTELLUNG VON ENDGRUPPEN-VERKAPPTEN POLYETHERN**
METHOD FOR THE HOMOGENEOUSLY CATALYZED PRODUCTION OF TERMINAL GROUP-CAPPED POLYETHERS
PROCÉDÉ DE PRÉPARATION PAR CATALYSE HOMOGÈNE DE POLY(ÉTHERS) COIFFÉS DE GROUPES TERMINAUX

(30) Priorität: 19.12.2006 DE 102006059954
(43) Veröffentlichungstag der Anmeldung: 25.11.2009
(73) Patentinhaber: Saltigo GmbH, 40764 Langenfeld (DE)
(72) Erfinder: KRAHWINKEL, Ralf, 40764 Langenfeld (DE)
(74) Vertreter: Pettrich, Klaus-Günter
(86) Internationale Anmeldenummer: PCT/EP2007/063718
(87) Internationale Veröffentlichungsnummer: WO 2008/074696

(56) Entgegenhaltungen:
- EP-A- 0 296 473
- GB-A- 1 052 301
- US-A- 5 187 211

## Beschreibung

Die vorliegende Erfindung betrifft ein verbessertes Verfahren zur homogen katalysierten Herstellung von endgruppen-blockierten Polyethern.

Es ist bekannt, dass sich Polycarbonate aufgrund ihrer physikalischen und mechanischen Eigenschaften für eine Vielfalt von Anwendungen auf medizinischem Gebiet eignen. Als problematisch erweist sich jedoch für manche Anwendungen, dass Polycarbonat-Harze zur Vergilbung neigen und eine vermehrte Trübung aufweisen. Im Stand der Technik wird daher der Zusatz unterschiedlichster Stabilisierungsmittel zu Polycarbonat-Formmassen vorgeschlagen. In der EP-A-0 296 473 wird beispielsweise beschrieben, Polycarbonat-Formmassen zwecks Stabilisierung gegen γ-Strahlung mit speziellen Stabilisierungsmitteln auf Basis von endgruppen-blockierten Polyethern zu versetzen.

Als bevorzugte Substanz zur Endgruppen-Verkappung der speziellen Polyether wird in der EP-A-0 296 473 3,4-Dihydro-2*H*-pyran beschrieben. Die Herstellung dieser endgruppen-verkappten Polyether kann unter Einsatz einer Brönstedt-Säure wie p-Toluolsulfonsäure, HCl oder Benzolsulfonsäure als Katalysator erfolgen. Der Fokus liegt in der EP-A-0 295 473 dabei auf dem Einsatz von p-Toluolsulfonsäure. Die Umsetzung wird in Gegenwart von Tetrahydrofuran als Lösungsmittel durchgeführt. Die Aufarbeitung des Reaktionsgemischs ist aufwändig. Nach der Umsetzung muss überschüssige p-Toluolsulfonsäure durch Zugabe der Base Triethylamin abgefangen werden. Anschließend muss das Reaktionsgemisch filtriert werden, um das gebildete Triethylammonium - p-toluolsulfonat Salz zu entfernen, und anschließend im Vakuum destilliert werden, um nicht umgesetztes 3,4-Dihydro-2*H*-pyran sowie das Lösungsmittel aus dem Produkt zu entfernen. Eigene Untersuchungen haben gezeigt, dass die so erhaltenen und mit 3,4-Dihydro-2*H-*pyran blockierten Polyether gelb werden und ungenügende Hazenfarbzahlen aufweisen. Dies könnte auf im Polyether verbliebene Restmengen an Triethylammonium-p-toluolsulfonat zurückzuführen sein. 3,4-Dihydro-2*H*-pyran blockierte Polyether mit derart schlechten Hazenfarbzahlen sind nicht geeignet, um in Polycarbonat-Formmassen als Stabilisatoren eingesetzt zu werden.

Aus GB-A-1,052,301 ist es ferner bekannt, die OH Endgruppen von Blockcopolymeren auf Basis von Ethylenoxid und Propylenoxid ebenfalls mit 3,4-Dihydro-2*H*-pyran oder mit Alkylvinylethern zu blockieren. Als mögliche Katalysatoren werden Schwefelsäure, Salzsäure, Phosphorsäure oder ein stark saurer Kationen-Austauscher genannt. In allen aufgeführten Beispielen wird eine 85%ige Phosphorsäure als Katalysator eingesetzt. Auch hier ist ein aufwändiges Aufarbeiten des Reaktionsgemisches erforderlich, d.h. eine Neutralisation der überschüssigen Säure mit einer Base, Abdestillieren i des nicht umgesetzten Blockierungsagens und Filtration. Die Beschreibung der farblichen Qualität der Produkte zeigt, dass überwiegend verfärbte, teilweise sogar stark gefärbte Produkts erhalten werden. Da diese erhaltenen Endgruppen-blockierten Polyetherpolyole als Komponenten einer oberflächenaktiven Mischung eingesetzt werden, wird der farblichen Beschaffenheit des Endgruppen-blockierten Polyetherpolyols jedoch keine Beachtung geschenkt.

Eigene Untersuchungen unter Einsatz der ebenfalls in GB-A-1,052,301 genannten stark-sauren Kationen-Austauscher ergaben, dass auch dieser Katalysator zu endgruppen-blockierten Polyethern führt, die eine nicht-akzeptable Verfärbung zeigen, d.h. eine erhöhte Hazenfarbzahl besitzen. Über diese Qualitätsprobleme der erhaltenen Produkte hinaus besitzt die heterogene Katalyse mit Kationen-Austauschem weitere Nachteile: Das Reaktionsgemisch muss nach der Durchführung vom Katalysator filtriert werden. Auch das Handling des Katalysators ist aufwändig. Der Katalysator muss vor dem Einsatz gewaschen, filtriert und getrocknet werden. Das Wiederverwenden des Katalysators ist schwierig und von erneuten Aufarbeitungsschritten begleitet. Letztendlich muss der Katalysator durch Verbrennung vernichtet werden.

Die Aufgabe der vorliegenden Erfindung bestand somit darin, ein Verfahren zur Endgruppenblockierung von Polyethern bereitzustellen, bei dem endgruppen-blockierte Polyether erhalten werden, die keine Verfärbungen aufweisen und somit für Anwendungen in Polymerformmassen geeignet sind, bei denen es auf einwandfreie farbliche Beschaffenheit ankommt.

**Gegenstand der Erfindung** ist somit ein Verfahren zur Herstellung von Verbindungen der allgemeinen Formel (I) 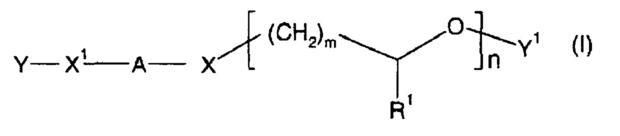 worin
- R¹: Wasserstoff, Halogen, einen geradkettigen oder verzweigten C₁-C₁₀Alkyl, C₆-C₁₄- Aryl-, C₇-C₁₈-Arylalkyl oder C₄-C₁₀-Cycloalkyl-Rest darstellt,
- n: eine ganze Zahl von mindestens 1 ist,
- m: eine ganze Zahl von mindestens 1 ist,
- X und X¹: gleich oder verschieden sind und Sauerstoff, Schwefel oder -NH bedeuten,
- A: einen geradkettigen oder verzweigten C₁-C₂₀-AlkyIenrest, einen Rest (-CH₂-CH₂- X²-)ₚ-CH₂-CH₂-, wobei p eine ganze Zahl von 2 bis 20 ist und X² Sauerstoff, Schwefel oder -NH bedeutet, oder einen Rest -(CH₂)ᵣ-X³-(CH₂)ₛ- bedeutet, wobei r und s unabhängig voneinander eine ganze Zahl von 1 bis 20 sind und X³ Sauerstoff, Schwefel oder Rest -NH bedeutet,
- Y und Y¹: gleich oder verschieden sind und Reste der nachfolgenden allgemeinen Formeln (II), (III) oder (IV) bedeuten, 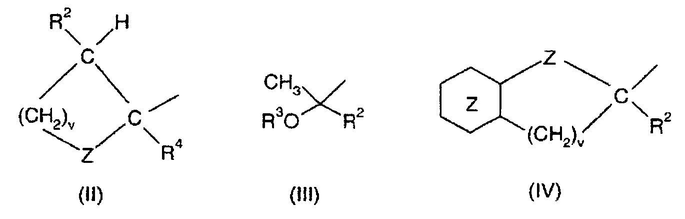 worin
Z gleich oder verschieden sind und Sauerstoff, Schwefel, einen Rest -NH oder einen Rest -NCH₃ bedeutet,
v eine ganze Zahl von 1 bis 6 ist,
R², R³ und R⁴ gleich oder verschieden sind und Wasserstoff, einen C₁-C₁₀-Alkyl, C₆-C₁₄-Aryl-, C₇-C₁₈-Arylalkyl oder C₄-C₁₀-Cycloalkyl-Rest darstellen, und die Darstellung von Z in der Mitte des Cyclohexylrings der Formel (IV) bedeutet, dass eines der Kohlenstoff-Atome im Cyclohexylring durch eine Einheit Z ersetzt sein kann, oder
- Y: auch einen Rest der allgemeinen Formel (V) darstellen kann, 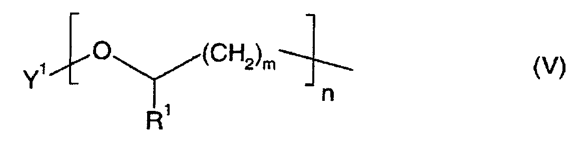 worin m, n, R¹ und Y¹ die zuvor genannten Bedeutungen besitzen,
durch Umsetzung von Verbindungen der allgemeinen Formel (VIa) und/oder (VIb) 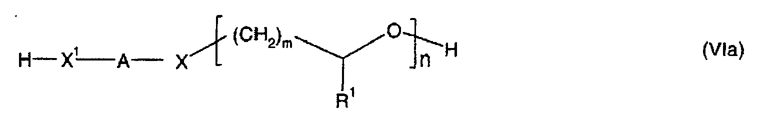 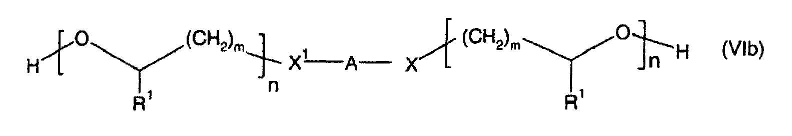 worin m, n, R¹, X, A und X¹ die entsprechenden Bedeutungen besitzen wie oben für die Verbindungen der allgemeinen Formel (I) angegeben,
mit einer Verbindung der allgemeinen Formeln (VII), (VIII) oder (IX) 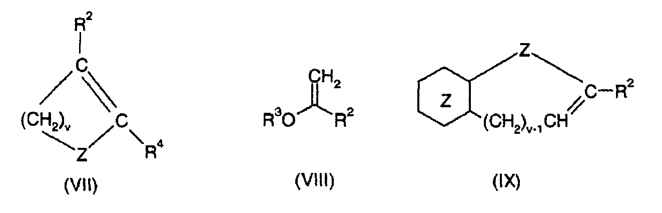 worin R², R³, R⁴, Z und v die gleichen Bedeutungen besitzen wie oben für die Reste der allgemeinen Formeln (II), (III) und (IV) angegeben,
dadurch gekennzeichnet, dass die Umsetzung eine homogen katalysierte Reaktion ist und in Gegenwart einer in wasserfreier Form vorliegenden Brönstedt-Säure als Katalysator durchgeführt wird, wobei es sich bei der Brönstedt-Säure um HCl handelt.

Überraschenderweise weisen die erhaltenen endgruppcnblockierten Verbindungen der allgemeinen Formel (I) eine exzellente farbliche Beschaffenheit auf und besitzen deutlich geringere Farbzahlen nach Hazen als die Produkte, die gemäß den Verfahren des Standes der Technik unter Katalyse mit wässriger HCl, Phosphorsäure, p-Toluolsulfonsäure oder stark-sauren Kationen-Austauschern erhalten werden können. Gleichzeitig zeichnet sich das erfindungsgemäße Verfahren durch eine einfache Durchführung aus. Es kann ohne organisches Lösungsmittel gearbeitet werden und mehrstufige aufwändige Aufarbcitungsschritte, wie sie im Stand der Technik erforderlich sind, müssen nicht durchgeführt werden: Aufgrund der hohen katalytischen Wirksamkeit werden nur sehr geringe Mengen des Katalysators bei der Reaktion eingesetzt, die später problemlos im Produkt verbleiben können. Die mit dem erfindungsgemäßen Verfahren erhaltenen Produkte der allgemeinen Formel (I) besitzen einen Gehalt an Brönstedt-Säure, der lediglich im zweistelligen ppm Bereich liegt. Auch der Blockierungsgrad, der mit dem erfindungsgemäßen Verfahren erzielt werden kann, liegt deutlich über den Werten, die mit den Verfahren des Standes der Technik erhalten werden. Üblicherweise wird der Blockierungs- (oder auch Verkappungs-) grad durch Messung der OH-Zahl verfolgt. Hierzu wird das Reaktionsgemisch mit Phthalsäureanhydrid umgesetzt und das nicht umgesetzte Phthalsäureanhydrid gegen NaOH titriert.

Von Bedeutung ist es, dass im erfindungsgemäßen Verfahren in Gegenwart einer in wasserfreier Form vorliegenden HCl gearbeitet wird und es sich demzufolge um eine homogen katalysierte Reaktion handelt.

Als in wasserfreier Form vorliegende Brönstedt-Säure wird HCl, eingesetzt.

Der Begriff "wasserfreie Form" bedeutet im Rahmen dieser Anmeldung, dass der Katalysator einen Wassergehalt von maximal 0,05 Gew%, bevorzugt maximal 0,025 Gew.% aufweist.

Im Rahmen dieser Anmeldung und Erfindung können alle im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

In einer **bevorzugten Ausführungsform** werden mit dem erfindungsgemäßen Verfahren Verbindungen der allgemeinen Formel (I) hergestellt, indem man Verbindungen der allgemeinen Formel (VIa) und/oder (VIb) 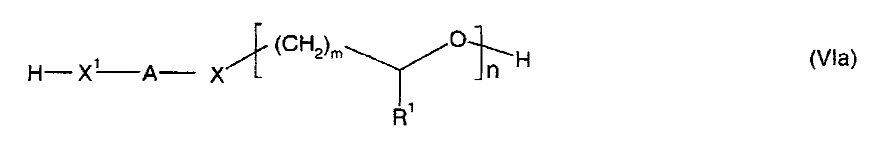 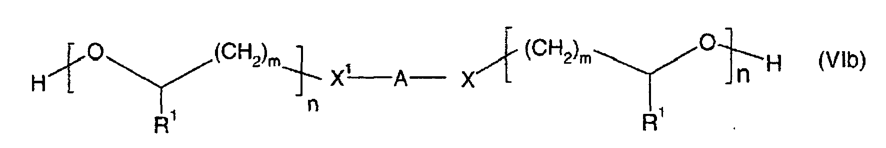 worin
- R¹: Wasserstoff, Chlor, Brom, Jod, einen geradkettigen oder verzweigten C₁-C₁₀- Alkyl, C₆-C₁₀-Aryl-, C₇-C₁₂-Arylalkyl oder C₄-C₈-Cycloalkyl-Rest darstellt,
- n: eine ganze Zahl im Bereich von 1 bis 100, besonders bevorzugt 10 bis 60, insbesondere 10 bis 50 ist,
- m: eine ganze Zahl im Bereich von 1 bis 10, insbesondere 1 ist,
- X und X¹: gleich oder verschieden sind und Sauerstoff, Schwefel oder einen Rest -NH bedeuten,
- A: einen geradkettigen oder verzweigten C₁-C₁₀-Alkylenrest, besonders bevorzugt einen C₁-C₈-Alkylenrest, einen Rest (-CH₂-CH₂-X²-)ₚ-CH₂-CH₂-, wobei p eine ganze Zahl von 2 bis 10 ist und X² Sauerstoff, Schwefel oder -NH bedeutet, oder einen Rest (CH₂)ᵣ-X³ -(CH₂)ₛ bedeutet, wobei r und s unabhängig voneinander eine ganze Zahl von 1 bis 10 sind und X³ Sauerstoff, Schwefel oder Rest -NH bedeutet,
mit einer Verbindung der allgemeinen Formeln (VII), (VIII) oder (IX) 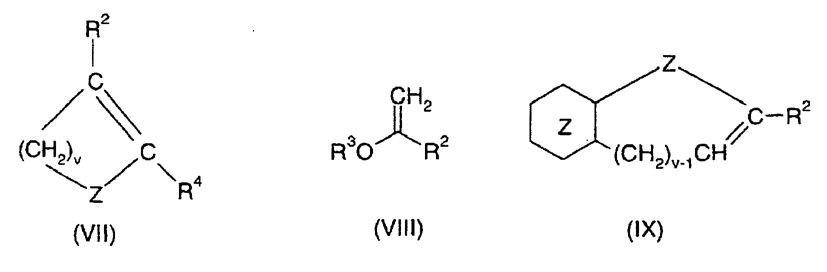 umsetzt, worin
- Z: gleich oder verschieden sind und Sauerstoff, Schwefel oder einen Rest -NHI bedeuten,
- v: eine ganze Zahl von 1 bis 6, insbesondere 2 oder 3 ist,
- R², R³ und R⁴: gleich oder verschieden sind und Wasserstoff, einen geradkettigen oder verzweigten C₁-C₄-Alkyl, C₆-C₁₀-Aryl-, C₇-C₁₄-Arylalkyl oder C₄-C₈-Cycloalkyl-Rest darstellen,
und die Darstellung von Z in der Mitte des Cyclohexylrings der Formel (IV) bedeutet, dass eines der Kohlenstoff-Atome im Ring durch eine Einheit Z ersetzt sein kann,

In einer **besonders bevorzugten Ausführungsform** werden mit dem erfindungsgemäßen Verfahren Verbindungen der allgemeinen Formel (I) hergestellt, indem man Verbindungen der allgemeinen Formel (VIa) und/oder (VIb) worin
- R¹: Wasserstoff oder Methyl bedeutet,
- n: eine ganze Zahl im Bereich von 10 bis 60, insbesondere 10 bis 50 ist,
- m: 1 ist,
- X und X¹: gleich oder verschieden sind und Sauerstoff, Schwefel oder einen Rest -NH bedeuten,
- A: einen geradkettigen oder verzweigten C₁-C₁₀-Alkylenrest, besonders bevorzugt einen C₁-C₈-Alkylenrest, insbesondere Ethylen, Propylen, n-Butylen, n-Pentylen oder n-Hexylen, einen Rest (-CH₂-CH₂-X²-)ₚ-CH₂-CH₂-, wobei p eine ganze Zahl von 2 bis 10 ist und X² Sauerstoff, Schwefel oder -NH bedeutet, oder einen Rest (CH₂)ᵣ-X³-(CH₂)ₛ bedeutet, wobei r und s gleich und eine ganze Zahl von 1 bis 10 sind und X³ Sauerstoff, Schwefel oder Rest -NH bedeutet,
mit einer Verbindung der allgemeinen Formel (VIIa) 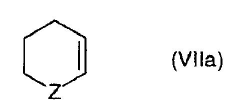 wobei Z Sauerstoff, Schwefel oder einen Rest -NH bedeutet,
mit in wasserfreier Form vorliegender HCl umsetzt.

Besonders bevorzugt wird das erfindungsgemäße Verfahren unter Einsatz von 3,4-Dihydro-2H pyran als Verbindung der allgemeinen Formel (VIIa) durchgeführt.

Die Verbindungen der allgemeinen Formel (VIa) und (VIb) können entweder käuflich erworben werden oder nach dem Fachmann bekannten Methoden hergestellt werden. So können beispielsweise Verbindungen der Formeln H-X¹-A-X-H, wobei A, X und X¹ die vorgenannten Bedeutungen haben, alkoxyliert werden, z.B. unter Einsatz von Ethylenoxid oder Propylenoxid, und zu den entsprechenden Edukten umgesetzt werden. Auch die Verbindungen der allgemeinen Formel (VII), (VIII) und (IX) können entweder käuflich erworben werden oder nach dem Fachmann bekannten Methoden hergestellt werden.

Die Verbindung der allgemeinen Formel (VII), (VIII) oder (IX) wird im erfindungsgemäßen Verfahren bezogen auf die in der Verbindung der allgemeinen Formel (VIa) und (VIb) vorhandenen und zu blockierenden Endgruppen üblicherweise in einer molaren Menge von 3:1 bis 5:1, bevorzugt 4:1 bis 5:1 eingesetzt.

Es hat sich bewährt, die in wasserfreier Form vorliegende Brönstedt-Säure zunächst in einer kleinen Teilmenge der Verbindung der allgemeinen Formel (VIa) und/oder (VIb) zu lösen und dann zusammen mit der Restmenge der Verbindung der allgemeinen Formel (VIa) und/oder (VIb) in einem Reaktionsgefäß vorzulegen. Dann wird die Verbindung der allgemeinen Formel (II], (II-1) der (IV) zugegeben. Anschließend wird das Reaktionssystem erwärmt. Üblicherweise wird die erfindungsgemäße Umsetzung bei einer Temperatur im Bereich von 60 bis 80 °C durchgeführt. Bewährt hat sich die Durchführung bei 65 bis 75 °C, insbesondere bei 70 bis 74 °C. Die Umsetzung ist typischerweise nach 4 bis 8 Stunden beendet.

Die in wasserfreier Form vorliegende Brönstedt-Säure wird bewährterweise in einer solchen Teilmenge der Verbindung der allgemeinen Formel (VIa) und/oder (VIb) gelöst, dass sich eine 1 bis 10 %ige, bevorzugt eine 7-10 %ige Lösung einstellt. Bezogen auf die Gesamtmenge der umzusetzenden Verbindung der allgemeinen Formel (VIa) und (VIb) werden 0,1 bis 2 Mol %, bevorzugt 0,5 bis 1 Mol % Katalysator eingesetzt.

Nach der erfindungsgemäßen Umsetzung ist es zwecks Aufarbeitung sinnvoll, einen eventuell noch vorhandenen Überschuss der Verbindung der allgemeinen Formel (VII), (VIII) oder (IX) abzutrennen. Üblicherweise erfolgt dies durch Destillation. Das erhaltene Produkte kann dann ohne jede weitere Aufarbeitung direkt eingesetzt werden, so z.B. als Stabilisator in Polycarbonat-Formmassen.

Vorteilhaft ist, dass das erfindungsgemäße Verfahren homogen katalysiert ist, ohne Verwendung von Lösungsmitteln und ohne Filtrationsschritte durchgeführt werden kann.

### BEISPIELE

In den nachfolgenden Beispielen wird Desmophen^{®} PET 3600 eingesetzt. Dies ist ein Handelsprodukt der BayerMaterialScience AG. Bei Desmophen^{®} PET 3600 handelt es sich um 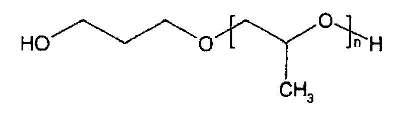 mit einem Molekulargewicht von ca. 2000 g/mol.

Lewatit^{®} K 1431 ist ein Handelsprodukt der Lanxess Deutschland GmbH und ein stark-saurer Kation-Austauscher.

Die Hazenfarbzahl wurde nach DIN EN 1557 bestimmt.

### Beispiel 1 (Vergleich; heterogene Katalyse unter Einsatz eines stark-sauren Kation-Austauschers)

440 g Desmophen^{®} 3600 und 62 g Lewatit^{®} K 1431 werden bei 20°C unter Stickstoffatmosphäre vorgelegt. Das Gemisch wurde auf 70-74°C erwärmt und bei dieser Temperatur wurden 47,6 g 3,4-Dihydro-2*H*-pyran in einer Stunde zugetropft. Anschließend wurde 5 Sunden lang bei 70-74 °C nachgerührt. Überschüssiges 3,4-Dihydro-2*H*-pyran wurde anschließend unter verringertem Druck entfernt. Nach Abkühlen auf 20°C wurde vom Katalysator abfiltriert und abgefüllt.

Der 3,4-Dihydro-2*H*-pyran-blockierte Polyether wurde mit einer Ausbeute von 480 g und einer OH-Zahl < 30. Er besaß eine gelbliche Färbung und eine Hazenfarbzahl von 30.

### Beispiel 2 (Vergleich; Einsatz von p-Toluolsulfonsäure)

315 g Desmophen^{®} 3600 und 0,4 g p-Toluolsulfonsäure wurden vorgelegt. Bei 70-74 °C wurden 34 g 3,4-Dihydro-2*H*-pyran in 50 Minuten zugetropft. Anschließend wurde 5 Stunden lang bei 70-74°C nachgerührt. Dabei färbte sich der Ansatz bereits stark gelb (Hazenfarbzahl > 50) und musste vollständig verworfen werden.

### Beispiel 3 (Vergleich; homogene Katalyse unter Einsatz von wässriger HCl)

220 g Desmophen^{®} 3600 und 0,06 g wässrige HCl (37%ig) wurden bei 20°C vorgelegt. Dazu wurden 25 g 3,4-Dihydro-2*H*-pyran gegeben. Das Gemisch wurde anschließend auf 70-72°C erwärmt und bei dieser Temperatur 5 Stunden nachgerührt. Überschüssiges 3,4-Dihydro-2*H*-pyran wurde anschließend unter verringertem Druck entfernt. Nach Abkühlen auf 20°C wurde das Produkt abgefüllt.

Der 3,4-Dihydro-2*H*-pyran-blockierte Polyether wurde mit einer Ausbeute von 240 g, einer OH-Zahl von 25 und einer Hazenfarbzahl von 30 erhalten. Nach einigen Tagen verfärbte sich das Produkt weiter gelb.

### Beispiel 4 (erfindungsgemäß; homogene Katalyse unter Einsatz von wasserfreier HCl)

1110 g Desmophen^{®} 3600 und 1 g Desmophen/wasserfreie HCl (10%) wurden bei 20°C vorgelegt. Dazu wurden 120 g 3,4-Dihydro-2*H*-pyran gegeben. Das Gemisch wurde anschließend auf 70-74°C erwärmt und bei dieser Temperatur 5 Stunden nachgerührt. Überschüssiges 3,4-Dihydro-2*H-*pyran wurde anschließend unter verringertem Druck entfernt. Nach Abkühlen auf 20°C wurde das Produkt abgefüllt.

Der 3,4-Dihydro-2*H*-pyran-blockierte Polyether wurde mit einer Ausbeute von 1200 g, einer OH-Zahl < 20 und einer Hazenfarbzahl von 15 erhalten. Auch nach einigen Tagen verfärbte sich das Produkt nicht.

## Patentansprüche

1. Verfahren zur Herstellung von Verbindungen der allgemeinen Formel (I) 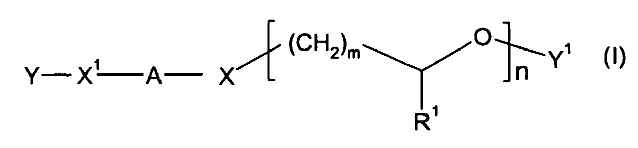 worin
R¹ Wasserstoff, Halogen, einen geradkettigen oder verzweigten C₁-C₁₀-Alkyl, C₆-C₁₄- Aryl-, C₇-C₁₈-Arylalkyl oder C₄-C₁₀-Cycloalkyl-Rest darstellt,
n eine ganze Zahl von mindestens 1 ist,
m eine ganze Zahl von mindestens 1 ist,
X und X¹ gleich oder verschieden sind und Sauerstoff, Schwefel oder -NH bedeuten,
A einen geradkettigen oder verzweigten C₁-C₂₀-Alkylenrest, einen Rest (-CH₂-CH₂- X²-)ₚ-CH₂-CH₂-, wobei p eine ganze Zahl von 2 bis 20 ist und X² Sauerstoff, Schwefel oder -NH bedeutet, oder einen Rest -(CH₂)ᵣ-X³-(CH₂)ₛ- bedeutet, wobei r und s unabhängig voneinander eine ganze Zahl von 1 bis 20 sind und X³ Sauerstoff, Schwefel oder Rest -NH bedeutet,
Y und Y¹ gleich oder verschieden sind und Reste der nachfolgenden allgemeinen Formeln (II), (III) oder (IV) bedeuten, 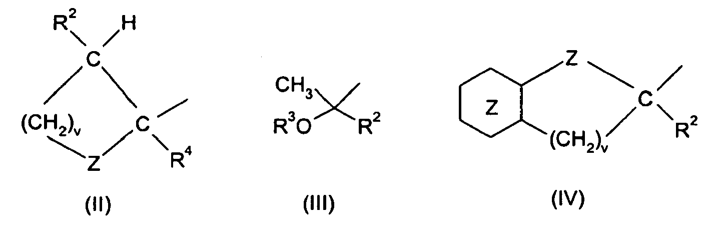 worin
Z gleich oder verschieden sind und Sauerstoff, Schwefel, einen Rest -NH oder einen Rest NCH₃ bedeutet,
v eine ganze Zahl von 1 bis 6 ist,
R², R³ und R⁴ gleich oder verschieden sind und Wasserstoff, einen C₁-C₁₀-Alkyl, C₆-C₁₄-Aryl-, C₇-C₁₈-Arylalkyl oder C₄-C₁₀-Cycloalkyl-Rest darstellen,
und die Darstellung von Z in der Mitte des Cyclohexylrings der Formel (IV) bedeutet, dass eines der Kohlenstoff-Atome im Cyclohexylring durch eine Einheit Z ersetzt sein kann,
oder
Y auch einen Rest der allgemeinen Formel (V) darstellen kann, 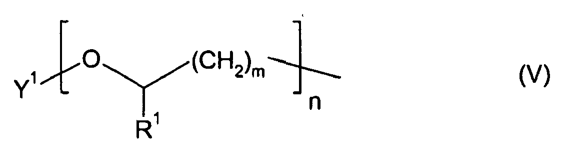
worin m, n, R¹ und Y¹ die zuvor genannten Bedeutungen besitzen,
durch Umsetzung von Verbindungen der allgemeinen Formel (VIa) und/oder (VIb) 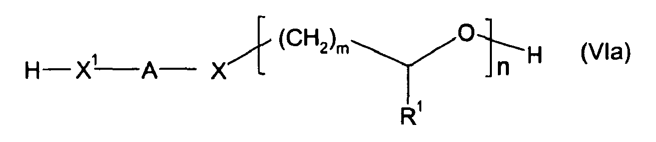 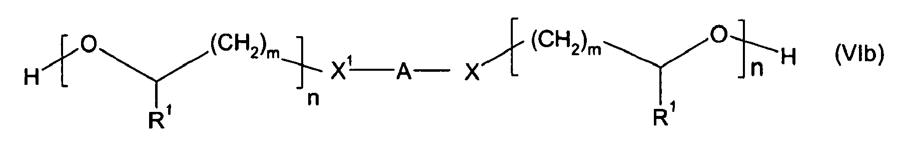 worin m, n, R¹, X, A und X¹ die entsprechenden Bedeutungen besitzen wie für die Verbindungen der allgemeinen Formel (I) angegeben,
mit einer Verbindung der allgemeinen Formel (VII), (VIII) oder (IX) 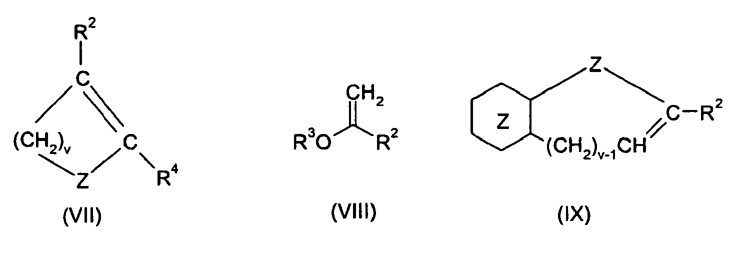 worin R², R³, R⁴, Z und v die gleichen Bedeutungen besitzen wie für die Reste der allgemeinen Formeln (II), (III) und (IV) angegeben,
**dadurch gekennzeichnet, dass** die Umsetzung eine homogen katalysierte Reaktion ist und
in Gegenwart einer in wasserfreier Form vorliegenden HCl als Katalysator durchgeführt wird.

2. Verfahren nach Anspruch 1, wobei Verbindungen der allgemeinen Formeln (VIa) und/oder (VIb), in denen
R¹ Wasserstoff, Chlor, Brom, Jod, einen geradkettigen oder verzweigten C₁-C₁₀- Alkyl, C₆-C₁₀-Aryl-, C₇-C₁₂-Arylalkyl oder C₄-C₈-Cycloalkyl-Rest darstellt,
n eine ganze Zahl im Bereich von 1 bis 100 ist,
m eine ganze Zahl im Bereich von 1 bis 10 ist,
X und X¹ gleich oder verschieden sind und Sauerstoff, Schwefel oder einen Rest -NH bedeuten, und
A einen geradkettigen oder verzweigten C₁-C₁₀-Alkylenrest, oder einen Rest (CH₂)ᵣ- X³-(CH₂)ₛ bedeutet, wobei r und s unabhängig voneinander eine ganze Zahl von 1 bis 10 sind und X³ Sauerstoff, Schwefel oder Rest -NH bedeutet,
mit einer Verbindung der allgemeinen Formel (VII), (VIII) oder (IX) umgesetzt werden, worin
Z gleich oder verschieden sind und Sauerstoff, Schwefel oder einen Rest -NH bedeuten,
v eine ganze Zahl von 1 bis 6, insbesondere 2 oder 3 ist,
R², R³ und R⁴ gleich oder verschieden sind und Wasserstoff, einen geradkettigen oder verzweigten C₁-C₄-Alkyl, C₆-C₁₀-Aryl-, C₇-C₁₄-Arylalkyl oder C₄-C₈-Cycloalkyl- Rest darstellen,
und die Darstellung von Z in der Mitte des Cyclohexylrings der Formel (IV) bedeutet, dass eines der Kohlenstoff-Atome im Cyclohexylring durch eine Einheit Z ersetzt sein kann.

3. Verfahren nach Anspruch 1, wobei Verbindungen der allgemeinen Formel (VIa) und/oder (VIb), in denen
R¹ Wasserstoff oder Methyl bedeutet,
n eine ganze Zahl im Bereich von 10 bis 60ist,
m 1 ist,
X und X¹ gleich oder verschieden sind und Sauerstoff, Schwefel oder einen Rest -NH bedeuten,
A einen geradkettigen oder verzweigten C₁-C₈-Alkylenrest oder, einen Rest (-CH₂- CH₂-X²-)ₚ-CH₂-CH₂-, wobei p eine ganze Zahl von 2 bis 10 ist und X² Sauerstoff, Schwefel oder -NH bedeutet bedeutet,
mit einer Verbindung der allgemeinen Formel (VIIa) 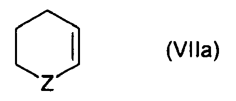 wobei Z Sauerstoff, Schwefel oder einen Rest -NH bedeutet,
umgesetzt werden.

4. Verfahren nach einem oder mehreren der Ansprüche 1 bis 3, wobei als Verbindung der allgemeinen Formel (VII) 3,4-Dihydro-2*H*-pyran eingesetzt wird.

5. Verfahren nach einem oder mehreren der Ansprüche 1 bis 4, wobei die Verbindung der allgemeinen Formel (VII), (VIII) oder (IX) bezogen auf die in der Verbindung der allgemeinen Formel (VIa) und (VIb) vorhandenen und zu blockierenden Endgruppen in einer molaren Menge von 3:1 bis 5:1, eingesetzt wird.

6. Verfahren nach einem oder mehreren der Ansprüche 1 bis 5, wobei die in wasserfreier Form vorliegende HCl zunächst in einer kleinen Teilmenge der Verbindung der allgemeinen Formel (VIa) und/oder (VIb) gelöst wird und dann zusammen mit der Restmenge der Verbindung der allgemeinen Formel (VIa) bzw. (VIb) in einem Reaktionsgefäß vorgelegt wird und dann die Verbindung der allgemeinen Formel (II), (III) der (IV) zugegeben wird.

7. Verfahren nach einem oder mehreren der Ansprüche 1 bis 6, wobei die Umsetzung bei einer Temperatur im Bereich von 60 bis 80 °C, erfolgt.

8. Verfahren nach einem oder mehreren der Ansprüche 1 bis 7, wobei die in wasserfreier Form vorliegende HCl in einer solchen Teilmenge der Verbindung der allgemeinen Formel (VIa) und/oder (VIb) gelöst wird, dass sich eine 1 bis 10 %ige Lösung einstellt.

9. Verfahren nach einem oder mehreren der Ansprüche 1 bis 8, wobei bezogen auf die Gesamtmenge der umzusetzenden Verbindung der allgemeinen Formel (VIa) bzw. (VIb) 0,1 bis 2 Mol %, HCl eingesetzt werden.

## Claims

1. Process for preparing compounds of the general formula (I) 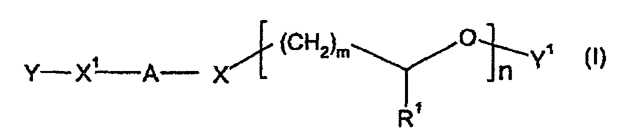 in which
R¹ is hydrogen, halogen, a straight-chain or branched C₁-C₁₀-alkyl, C₆-C₁₄-aryl, C₇-C₁₈-arylalkyl or C₄-C₁₀-cycloalkyl radical,
n is an integer of at least 1,
m is an integer of at least 1,
X and X¹ are the same or different and are each oxygen, sulphur or -NH,
A is a straight-chain or branched C₁-C₂₀-alkylene radical, a (-CH₂-CH₂-X²-)ₚ-CH₂-CH₂- radical where p is an integer from 2 to 20 and X² is oxygen sulphur or -NH, or a -(CH₂)ᵣ-X³-(CH₂)ₛ- radical where r and s are each independently an integer from 1 to 20 and X³ is oxygen, sulphur or an -NH radical,
Y and Y¹ are the same or different and are each radicals of the following general formulae (II), (III) or (IV): 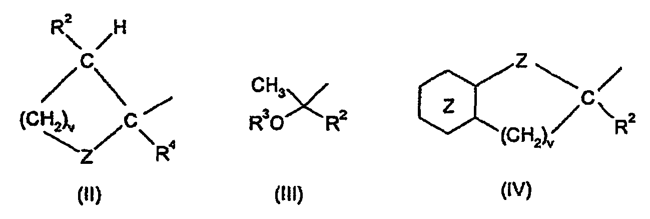 in which
Z are the same or different and are each oxygen, sulphur, an -NH radical or an -NCH₃ radical,
v is an integer from 1 to 6,
R², R³ and R⁴ are the same or different and are each hydrogen, or a C₁-C₁₀-alkyl, C₆-C₁₄-aryl, C₇-C₁₈-arylalkyl or C₄-C₁₀- cycloalkyl radical,
and the representation of Z in the middle of the cyclohexyl ring of the formula (IV) means that one of the carbon atoms in the cyclohexyl ring may be replaced by a Z unit,
or
Y may also be a radical of the general formula (V) 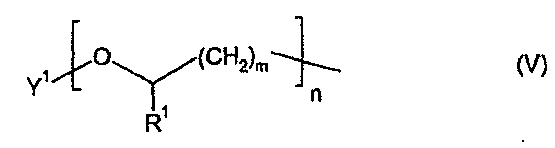
in which m, n, R¹ and Y¹ are each as defined above,
by reacting compounds of the general formula (VIa) and/or (VIb) 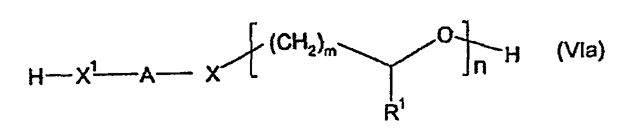 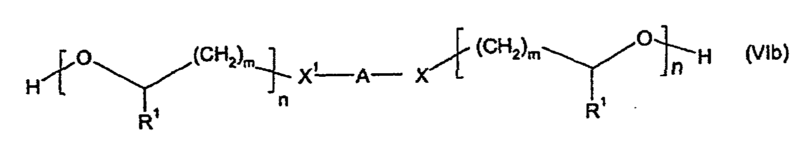 in which m, n, R¹, X, A and X¹ are each as defined for the compounds of the general formula (I)
with a compound of the general formula (VII), (VIII) or (IX) 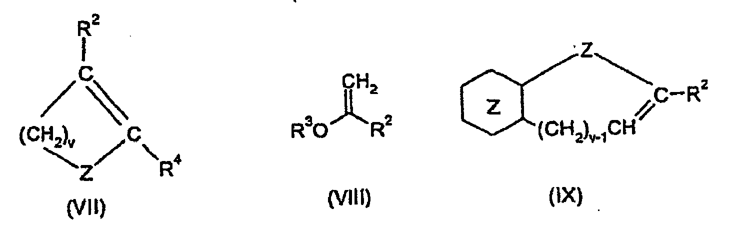 in which R², R³, R⁴, Z and v are each as defined for the radicals of the general formulae (II), (III) and (IV),
**characterized in that** the reaction is a homogeneously catalysed reaction and is performed in the presence of HCl in anhydrous form as a catalyst.

2. Process according to Claim 1, wherein compounds of the general formula (VIa) and/or (VIb) in which
R¹ is hydrogen, chlorine, bromine, iodine, a straight-chain or branched C₁-C₁₀-alkyl, C₆-C₁₀-aryl, C₇-C₁₂-arylalkyl or C₄-C₈-cycloalkyl radical,
n is an integer in the range from 1 to 100,
m is an integer in the range from 1 to 10,
X and X¹ are the same or different and are each oxygen, sulphur or an -NH radical, and
A is a straight-chain or branched C₁-C₁₀-alkylene radical, or a (CH₂)ᵣX³-(CH₂), radical where r and s are each independently an integer from 1 to 10, and X³ is oxygen, sulphur or an -NH radical,
are reacted with a compound of the general formula (VII), (VIII) or (IX) in which
Z are the same or different and are each oxygen, sulphur or an -NH radical,
v is an integer from 1 to 6, especially 2 or 3,
R², R³ and R⁴ are the same or different and are each hydrogen, or a straight- chain or branched C₁-C₄-alkyl, C₆-C₁₀-aryl, C₇-C₁₄-arylalkyl or C₄-C₈-cycloalkyl radical,
and the representation of Z in the middle of the cyclohexyl ring of the formula (IV) means that one of the carbon atoms in the cyclohexyl ring may be replaced by a Z unit.

3. Process according to Claim 1, wherein compounds of the general formula (VIa) and/or (VIb) in which
R¹ is hydrogen or methyl,
n is an integer in the range from 10 to 60,
m is 1,
X and X¹ are the same or different and are each oxygen, sulphur or an -NH radical,
A is a straight-chain or branched C₁-C₈-alkylene radical or a (-CH₂-CH₂-X²-)ₚ-CH₂-CH₃- radical where p is an integer from 2 to 10 and X² is oxygen, sulphur or -NH,
are reacted with a compound of the general formula (VIIa) 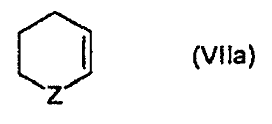 where X is oxygen, sulphur or an -NH radical.

4. Process according to one or more of Claims 1 to 3, wherein the compound of the general formula (VII) used is 3,4-dihydro-2H-pyran.

5. Process according to one or more of Claims 1 to 4, wherein the compound of the general formula (VII), (VIII) or (IX) is used in a molar amount of 3:1 to 5:1, based on the end groups which are present in the compound of the general formula (VIa) and (VIb) and are to be blocked.

6. Process according to one or more of Claims 1 to 5, wherein the HCl in anhydrous form is first dissolved in a small partial amount of the compound of the general formula (VIa) and/or (VIb) and is then initially charged in a reaction vessel together with the remaining amount of the compound of the general formula (VIa) or (VIb), and then the compound of the general formula (II), (III) or (IV) is added.

7. Process according to one or more of Claims 1 to 6, wherein the reaction is effected at a temperature in the range from 60 to 80°C.

8. Process according to one or more of Claims 1 to 7, wherein the HCl in anhydrous form is dissolved in such a partial amount of the compound of the general formula (VIa) and/or (VIb) that a 1 to 10% solution is established.

9. Process according to one or more of Claims 1 to 8, wherein 0.1 to 2 mol% of HCl is used, based on the total amount of the compound of the general formula (VIa) or (VIb) to be reacted.

## Revendications

1. Procédé de fabrication de composés de formule générale (I) 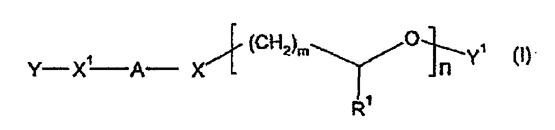 dans laquelle
R¹ représente l'hydrogène, un halogène, un radical alkyle en C₁-C₁₀, aryle en C₆-C₁₄, arylalkyle en C₇-C₁₈ ou cycloalkyle en C₄-C₁₀ linéaire ou ramifié,
n est un nombre entier d'au moins 1,
m est un nombre entier d'au moins 1,
X et X¹ sont identiques ou différents et signifient oxygène, soufre ou -NH,
A signifie un radical alkylène en C₁-C₂₀ linéaire ou _{amifié, un radical (-CH2}-CH₂-X²-)ₚ-CH₂-CH₂-, p étant un nombre entier de 2 à 20 et X² signifiant oxygène, soufre ou -NH, ou un radical -(CH²)ᵣ-X³-(CH₂)ₛ-, r et s étant indépendamment l'un de l'autre un nombre entier de 1 à 20 et X³ signifiant oxygène, soufre ou un radical -NH,
Y et Y¹ sont identiques ou différents et signifient des radicaux des formules générales (II), (III) ou (IV) suivantes, 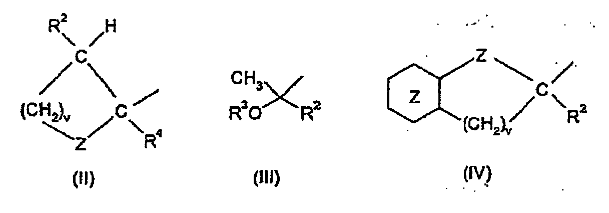 dans lesquelles
les Z sont identiques ou différents et signifient oxygène, soufre, un radical -NH ou un radical -NCH₃,
v est un nombre entier de 1 à 6,
R², R³ et R⁴ sont identiques ou différents et représentent l'hydrogène, un radical alkyle en C₁-C₁₀, aryle en C₆-C₁₄, arylalkyle en C₇-C₁₈ ou cycloalkyle en C₄-C₁₀,
et la représentation de Z au milieu du cycle cyclohexyle de formule (IV) signifie qu'un des atomes de carbone du cycle cyclohexyle peut être remplacé par une unité Z,
ou
Y peut également représenter un radical de formule générale (V), 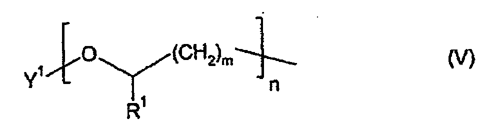
dans laquelle m, n, R¹ et Y¹ ont les significations données ci-dessus,
par réaction de composés de formule générale (VIa) et/ou (VIb) 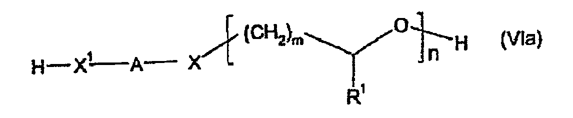 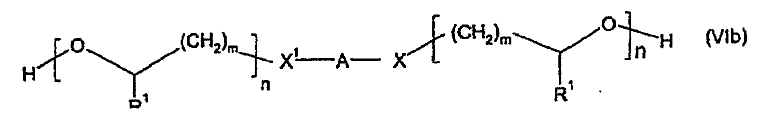 dans lesquelles m, n, R¹, X, A et X¹ ont les significations correspondant à celles données pour les composés de formule générale (I),
avec un composé de formule générale (VII), (VIII) ou (IX) 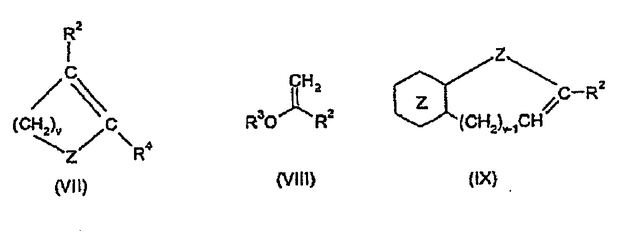 dans lesquelles R², R³, R⁴, Z et v ont les mêmes significations que celles données pour les radicaux des formules générales (II), (III) et (IV),
**caractérisé en ce que** la réaction est une réaction sous catalyse homogène et est réalisée en présence d'un HCl présent sous forme anhydre en tant que catalyseur.

2. Procédé selon la revendication 1, dans lequel des composés de formules générales (VIa) et/ou (VIb), dans lesquelles
R¹ représente l'hydrogène, le chlore, le brome, l'iode, un radical alkyle en C₁-C₁₀, aryle en C₆-C₁₀, arylalkyle en C₇-C₁₂ ou cycloalkyle en C₄-C₈ linéaire ou ramifié,
n est un nombre entier dans la plage allant de 1 à 100,
m est un nombre entier dans la plage allant de 1 à 10,
X et X¹ sont identiques ou différents et signifient oxygène, soufre ou un radical -NH, et
A signifie un radical alkylène en C₁-C₁₀ linéaire ou ramifié, ou un radical -(CH₂)ᵣ-X³-(CH₂)ₛ-, r et s étant indépendamment l'un de l'autre un nombre entier de 1 à 10 et X³ signifiant oxygène, soufre ou un radical -NH, sont mis en réaction avec un composé de formule générale (VII), (VIII) ou (IX), dans lesquelles
les Z sont identiques ou différents et signifient oxygène, soufre ou un radical -NH,
v est un nombre entier de 1 à 6, notamment 2 ou 3,
R², R³ et R⁴ sont identiques ou différents et représentent l'hydrogène, un radical alkyle en C₁-C₄, aryle en C₆-C₁₀, arylalkyle en C₇-C₁₄ ou cycloalkyle en C₄-C₈,
et la représentation de Z au milieu du cycle cyclohexyle de formule (IV) signifie qu'un des atomes de carbone du cycle cyclohexyle peut être remplacé par une unité Z.

3. Procédé selon la revendication 1, dans lequel des composés de formules générales (VIa) et/ou (VIb), dans lesquelles
R¹ signifie hydrogène ou méthyle,
n est un nombre entier dans la plage allant de 10 à 60,
m est 1,
X et X¹ sont identiques ou différents et signifient oxygène, soufre ou un radical -NH,
A signifie un radical alkylène en C₁-C₈ linéaire ou ramifié, ou un radical (-CH₂-CH₂-X²-)ₚ-CH₂-CH₂-, p étant un nombre entier de 2 à 10 et X² signifiant oxygène, soufre ou -NH,
sont mis en réaction avec un composé de formule générale (VIIa), 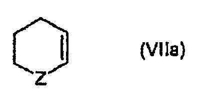 dans laquelle Z signifie oxygène, soufre ou un radical -NH.

4. Procédé selon une ou plusieurs des revendications 1 à 3, dans lequel le 3,4-dihydro-2H-pyrane est utilisé en tant que composé de formule générale (VII).

5. Procédé selon une ou plusieurs des revendications 1 à 4, dans lequel le composé de formule générale (VII), (VIII) ou (IX) est utilisé en une quantité molaire de 3:1 à 5:1 par rapport aux groupes terminaux présents dans le composé de formule générale (VIa) et (VIb) et à bloquer.

6. Procédé selon une ou plusieurs des revendications 1 à 5, dans lequel l' HCl présent sous forme anhydre est tout d'abord dissous dans une petite partie du composé de formule générale (VIa) et/ou (VIb), puis chargé avec le reste du composé de formule générale (VIa) ou (VIb) dans un récipient de réaction, puis le composé de formule générale (II), (III) ou (IV) est ajouté.

7. Procédé selon une ou plusieurs des revendications 1 à 6, dans lequel la réaction a lieu à une température dans la plage allant de 60 à 80 °C.

8. Procédé selon une ou plusieurs des revendications 1 à 7, dans lequel l'HCl présent sous forme anhydre est dissous dans une partie du composé de formule générale (VIa) et/ou (VIb) telle qu'une solution à 1 à 10 % se forme.

9. Procédé selon une ou plusieurs des revendications 1 à 8, dans lequel 0,1 à 2 % en moles d'HCl sont utilisés par rapport à la totalité du composé de formule générale (VIa) ou (VIb) à transformer.
